# EUROPÄISCHE PATENTANMELDUNG

(11) **EP 1 504 935 A1**
(43) Veröffentlichungstag der Anmeldung: **09.02.2005**
(21) Anmeldenummer: 04018588.6
(22) Anmeldetag: 05.08.2004
(51) Int. Cl.: B60H 1/00, B60H 1/32

(54) **Temperiersystem für ein Fahrzeug und Verfahren zum Betreiben eines Temperiersystems für ein Fahrzeug**

(30) Priorität: 07.08.2003 DE 10336248
(71) Anmelder: J. Eberspächer GmbH Co. KG, 73730 Esslingen (DE)
(72) Erfinder: Kohle, Uwe, 73779 Deizisau (DE); Schlecht, Patric, 73760 Ostfildern (DE); Collmer, Andreas, 73760 Ostfildern (DE); Eberspach, Günter, 72649 Wolfschlugen (DE)
(74) Vertreter: Ruttensperger, Bernhard, Dipl.-Phys.

(57) **Zusammenfassung**

Ein Temperiersystem für ein Fahrzeug, umfasst einen Verdampfer (36) einer Klimaanlage, wobei durch den Verdampfer (36) der in einen Fahrzeuginnenraum einzuleitenden Luft Wärme oder/und Feuchtigkeit entziehbar ist, eine erste Wärmetauscheranordnung (42) in Luftströmungsrichtung stromabwärts des Verdampfers (36), wobei durch die erste Wärmetauscheranordnung (42) der in den Fahrzeuginnenraum einzuleitenden Luft Wärme zuführbar ist, sowie eine Heizanordnung (20) mit einer zweiten Wärmetauscheranordnung (22) in Luftströmungsrichtung stromaufwärts des Verdampfers (36), wobei durch die zweite Wärmetauscheranordnung (22) der in den Fahrzeuginnenraum einzuleitenden Luft Wärme zuführbar ist.

## Beschreibung

Die vorliegende Erfindung betrifft ein Temperiersystem für ein Fahrzeug sowie ein Verfahren zum Betreiben eines derartigen Temperiersystems für ein Fahrzeug.

Bei modernen Kraftfahrzeugen kann die in den Fahrzeuginnenraum einzuleitende Luft in verschiedener Weise temperiert werden. Zum einen ist es möglich, durch Aktivieren einer Klimaanlage die in den Fahrzeuginnenraum einzuleitende Luft zu kühlen bzw. dieser Luftfeuchtigkeit zu entziehen, wozu derartige Klimaanlagen im Allgemeinen einen von einem Kältemittel durchströmten Verdampfer aufweisen, wobei durch Kältemittelverdampfung eine Kühlwirkung erzeugt wird und der den Verdampfer umströmenden Luft Wärme entzogen wird. Weiterhin ist es allgemein bekannt, dass durch Wärmeübertrag von dem Kühlkreislauf einer Brennkraftmaschine auf die in den Fahrzeuginnenraum einzuleitende Luft diese Luft erwärmt werden kann. Weiterhin ist es bekannt, durch gleichzeitiges Betreiben der Klimaanlage und durch Wärmeübertrag von dem Kühlkreislauf der Brennkraftmaschine auf die einzuleitende Luft einerseits warme Luft bereitzustellen, andererseits Luft in den Fahrzeuginnenraum einzuleiten, welcher zumindest ein gewisser Anteil an Feuchtigkeit entzogen ist. Diese Betriebsart wird vor allem bei vergleichsweise niedrigen Außentemperaturen und beispielsweise bei Regen gewählt, um das Beschlagen der Scheiben zu verhindern, gleichwohl jedoch angenehme Temperaturen im Fahrzeuginnenraum bereitstellen zu können.

Ein Problem bei derartigen Systemen besteht darin, dass die in Klimaanlagen eingesetzten Verdampfer, die von der zunächst einen vergleichsweise hohen Feuchtigkeitsanteil transportierenden, in den Fahrzeuginnenraum einzuleitenden Luft umströmt werden, aufgrund einer schwammartigen bzw. lamellenartigen Struktur, die zum Erreichen einer hohen Leistungsdichte erforderlich ist, Feuchtigkeit ansammeln. Dies kann zur Folge haben, dass im Bereich dieser Verdampfer Keimbildung auftritt bzw. durch übermäßige Feuchtigkeitsansammlung das Beschlagen der Scheiben nicht verhindert werden kann.

Es ist die Aufgabe der vorliegenden Erfindung, ein Temperiersystem für ein Fahrzeug sowie ein Verfahren zum Betreiben eines derartigen Temperiersystems vorzusehen, durch welche in zuverlässiger Art und Weise bei verbessertem hygienischen Umfeld das Beschlagen von Fahrzeugscheiben verhindert werden kann.

Erfindungsgemäß wird diese Aufgabe gelöst durch ein Temperiersystem für ein Fahrzeug, umfassend einen Verdampfer einer Klimaanlage, wobei durch den Verdampfer der in einen Fahrzeuginnenraum einzuleitenden Luft Wärme oder/und Feuchtigkeit entziehbar ist, eine erste Wärmetauscheranordnung in Luftströmungsrichtung stromabwärts des Verdampfers, wobei durch die erste Wärmetauscheranordnung der in den Fahrzeuginnenraum einzuleitenden Luft Wärme zuführbar ist, sowie eine Heizanordnung mit einer zweiten Wärmetauscheranordnung in Luftströmungsrichtung stromaufwärts des Verdampfers, wobei durch die zweite Wärmetauscheranordnung der in den Fahrzeuginnenraum einzuleitenden Luft Wärme zuführbar ist.

Bei dem erfindungsgemäßen Temperiersystem sind also zwei Bereiche bzw. zwei Wärmetauscheranordnungen vorhanden, in welchen auf die in den Fahrzeuginnenraum einzuleitende Luft Wärme übertragen werden kann. Eine dieser Wärmetauscheranordnungen ist stromaufwärts des Verdampfers angeordnet, während die andere stromabwärts liegt. Der wesentliche Aspekt dabei ist, dass die stromaufwärts des Verdampfers positionierte Wärmetauscheranordnung dazu genutzt werden kann, die den Verdampfer anströmende Luft vorwärmen und durch diese Luftvorwärmung und eine entsprechende Erwärmung des Verdampfers die Feuchtigkeitsansammlung im Bereich des Verdampfers mindern kann und auch die Gefahr der Keimbildung dort deutlich reduzieren kann.

Gemäß einem vorteilhaften Aspekt der vorliegenden Erfindung kann dabei vorgesehen sein, dass das Wärmeübertragungsvermögen der ersten Wärmetauscheranordnung und das Wärmeübertragungsvermögen der zweiten Wärmetauscheranordnung in aufeinander abgestimmter Weise veränderbar sind. Durch die Abstimmung des Wärmeübertragungsvermögens der beiden Wärmetauscheranordnungen aufeinander wird es möglich, bei beispielsweise durch einen Fahrer vorgegebener gewünschter Innenraumtemperatur und gleichzeitig aktivierter Klimaanlage dafür zu sorgen, dass ein zusätzliches Betreiben der Heizanordnung mit der zweiten Wärmetauscheranordnung nicht zu einer übermäßigen Erwärmung der in den Fahrzeuginnenraum einzuleitenden Luft führen kann, da durch die Abstimmung der Wärmeübertragungskapazitäten dann in entsprechender Art und Weise die erste Wärmetauscheranordnung hinsichtlich des Wärmeübertrags zurückgefahren werden kann.

Hierzu kann beispielsweise vorgesehen sein, dass das Wärmeübertragungsvermögen der ersten Wärmetauscheranordnung durch Verändern der Strömungsführung der in den Fahrzeuginnenraum einzuleitenden Luft veränderbar ist. Weiter ist es möglich, dass das Wärmeübertragungsvermögen der zweiten Wärmetauscheranordnung durch Verändern der Heizleistung der Heizanordnung veränderbar ist.

Bei einer besonders bevorzugten Ausgestaltungsform kann die Heizanordnung ein brennstoffbetriebenes Heizgerät umfassen. Dies bringt den Vorteil mit sich, dass das erfindungsgemäße System zusätzlich auch genutzt werden kann, um die Funktion einer Standheizung zu erfüllen. Weiter ist es selbstverständlich möglich, als Heizgeräte andere Energiequellen einzusetzen. Beispielsweise kann also die Heizanordnung auch umfassen: ein brennstoffbetriebenes Heizgerät, eine elektrisch betreibbare Wärmequelle, eine Hilfsenergiequelle, vorzugsweise Brennstoffzelle oder mechanisch oder thermodynamisch betriebene Hilfsenergiequelle, sowie ein Fahrzeugantriebsaggregat.

Die erste Wärmetauscheranordnung kann beispielsweise von dem Kühlsystem einer Brennkraftmaschine gespeist sein, so dass die einer Brennkraftmaschine entzogene Wärme in sinnvoller Art und Weise genutzt werden kann.

Gemäß einem weiteren Aspekt wird die eingangs genannte Aufgabe gelöst durch ein Verfahren zum Betreiben eines erfindungsgemäßen Temperiersystems, bei welchem Verfahren beispielsweise bei aktiviertem Verdampfer die erste Wärmetauscheranordnung und die zweite Wärmetauscheranordnung wenigstens zeitweise gleichzeitig zur Übertragung von Wärme auf die in den Fahrzeuginnenraum einzuleitende Luft aktiv sind.

Wie vorangehend beschrieben kann durch das wenigstens zeitweise gleichzeitige Betreiben der beiden Wärmetauscheranordnungen einerseits dafür gesorgt werden, dass die in den Fahrzeuginnenraum einzuleitende Luft die gewünschte Temperatur aufweist, insbesondere auch unter energieeffizienter Ausnutzung der im Bereich einer Brennkraftmaschine oder einer sonstigen Wärmequelle anfallenden Wärme, dass andererseits im Bereich des Verdampfers jedoch die Gefahr der übermäßigen Feuchtigkeitsansammlung und der Keimbildung deutlich gemindert wird.

Bei diesem Verfahren kann beispielsweise vorgesehen sein, dass bei aktivierter erster Wärmetauscheranordnung dann, wenn der Verdampfer aktiviert wird, die Heizanordnung mit der zweiten Wärmetauscheranordnung aktiviert wird und das Wärmeübertragungsvermögen der ersten Wärmetauscheranordnung verringert wird.

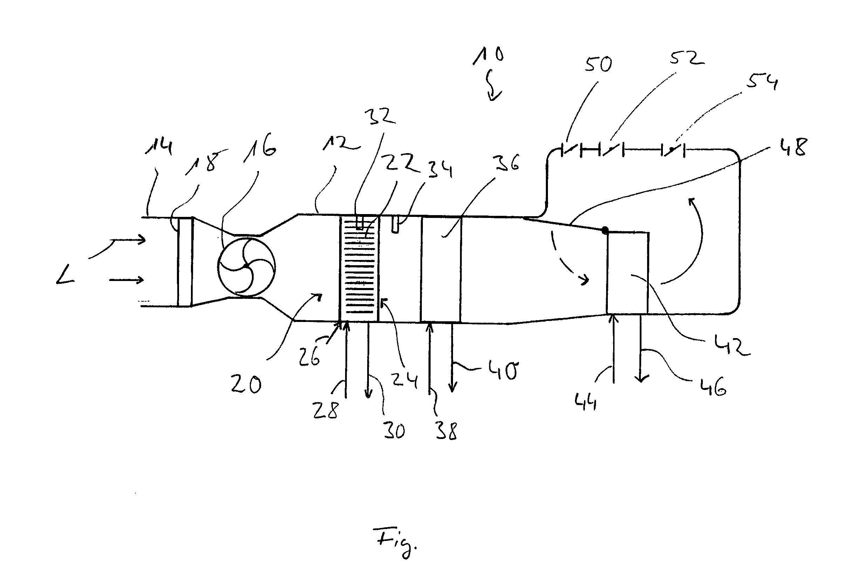

Die vorliegende Erfindung wird nachfolgend mit Bezug auf die beiliegende Figur detailliert beschrieben, welche in prinzipieller Darstellungsweise ein erfindungsgemäßes modulartig aufgebautes Temperiersystem zeigt.

Das in der Figur dargestellte und beispielsweise modulartig aufgebaute Temperiersystem 10 kann im Wesentlichen vollständig in einem Gehäuse 12 untergebracht sein, das selbstverständlich wiederum aus mehreren Gehäuseteilen zusammengefügt sein kann. In einem Eintrittsbereich 14 tritt die in einen Fahrzeuginnenraum einzuleitende und auch thermisch zu behandelnde Luft L in dieses erfindungsgemäße Temperiersystem 10 ein. Dabei wird diese in den Fahrzeuginnenraum einzuleitende Luft durch ein Luftfördergebläse 16 gefördert, das in einer Luftströmungsrichtung stromabwärts eines Filters 18 positioniert ist.

Die Luft L strömt dann auf eine allgemein mit 20 bezeichnete Heizanordnung zu, die ein beispielsweise brennstoffbetriebenes Heizgerät sowie eine durch mehrere Kühlrippen 22 veranschaulichte Wärmetauscheranordnung 24 aufweist. Dem Heizgerät werden Brennstoff 26 und Verbrennungsluft 28 zugeführt und die Verbrennungsprodukte 30 verlassen dann das Heizgerät bzw. die Heizanordnung 20 über einen zugeordneten Auslass. Dem Heizgerät kann ferner ein Überhitzungsfühler 32 zugeordnet sein, ebenso wie ein stromabwärts desselben positionierter Temperaturfühler 34, der die Temperatur der Luft L erfasst, nachdem diese an der Heizanordnung 20 bzw. der Wärmetauscheranordnung 24 derselben vorbeigeströmt ist.

In der Luftströmungsrichtung folgt auf diese Heizanordnung 20 dann ein Verdampfer 36 einer ansonsten nicht weiter dargestellten Klimaanlage. Diesem Verdampfer 36 wird flüssiges Kältemittel 38 zugeführt, wird darin unter Wärmeaufnahme verdampft und als Kältemitteldampf 40 wieder abgeführt wird. Bei dieser Verdampfung wird der den Verdampfer 36 umströmenden und in den Fahrzeuginnenraum einzuleitenden Luft Wärme entzogen.

Weiter stromabwärts des Verdampfers 36 ist eine weitere Wärmetauscheranordnung 42 vorgesehen. Dieser wird warmes Kühlmittel 44 aus einem Kühlkreislauf einer Brennkraftmaschine o.dgl. zugeführt. Bei aktivierter Wärmetauscheranordnung 42 überträgt dieses Kühlmittel Wärme auf die in den Fahrzeuginnenraum einzuleitende Luft, so dass das Kühlmittel als etwas kälteres Kühlmittel 46 die Wärmetauscheranordnung 42 verlässt und beispielsweise zu einem weiteren Wärmetauscher oder wieder zurück zur Brennkraftmaschine oder einer sonstigen Wärmequelle strömt.

Es ist weiterhin ein allgemein mit 48 bezeichnetes, beispielsweise klappenartig ausgestaltetes Strömungsumschaltelement vorgesehen, das durch einen nicht dargestellten Antrieb in verschiedene Stellungen gebracht werden kann. In der in der Figur dargestellten Stellung ist dieses Element 48 so geschaltet, dass im Wesentlichen die gesamte zugeführte und in den Fahrzeuginnenraum einzuleitende Luft in Richtung zur Wärmetauscheranordnung 42 geleitet wird, so dass durch entsprechenden Wärmeübertrag im Wesentlichen die gesamte in den Fahrzeuginnenraum einzuleitende Luft erwärmt wird und über eine Mehrzahl von separat einstellbaren Einleitelementen 50, 52, 54 dann an gewünschter Positionierung in den Fahrzeuginnenraum abgegeben wird. Wird das Element 48, wie durch den strichlierten Pfeil in der Figur angedeutet, verschwenkt, so wird zumindest ein Teil der in den Fahrzeuginnenraum einzuleitenden Luft nicht in Richtung zur Wärmetauscheranordnung 42 strömen, sondern direkt zu den Elementen 50, 52 und 54 geleitet, um über diese dann an gewünschter Positionierung in den Fahrzeuginnenraum eingeleitet zu werden. Es ist möglich, das Element 48 soweit zu verstellen bzw. zu verschwenken, dass die Wärmetauscheranordnung 42 vollständig deaktiviert ist, also die gesamte in den Fahrzeuginnenraum einzuleitende Luft die Wärmetauscheranordnung 42 nicht anströmen kann und somit auch in dieser keine Wärme aufnehmen kann.

Es ist selbstverständlich, dass die verschiedenen anzusteuernden Systembereiche des erfindungsgemäßen Temperiersystems, also das Gebläse 16, die Heizanordnung 20, die nicht weiter detailliert dargestellte Klimaanlage und das Element 48 bzw. der diesem zugeordnete Antrieb unter Ansteuerung eines zugeordneten Ansteuersystems stehen, um entweder durch Vorgabe gemäß einer abgelegten Routine oder durch Benutzervorgabe die verschiedenen Systembereiche in Betrieb zu setzen, ihren Betriebszustand zu verändern oder diese wieder außer Betrieb zu setzen.

Soll das erfindungsgemäße Temperiersystem 10 in einem Zustand betrieben werden, in dem einerseits vergleichsweise niedrige Außentemperaturen vorherrschen, andererseits jedoch eine sehr hohe Luftfeuchtigkeit vorhanden ist, wie dies beispielsweise bei Regen der Fall sein kann, so kann es von einem Fahrzeuginsaßen gewünscht werden, dass einerseits die Luft erwärmt wird, andererseits jedoch trockene Luft in den Fahrzeuginnenraum geleitet wird, um das Beschlagen der Scheiben zu verhindern. Es wird dann neben der Klimaanlage und somit auch dem Verdampfer 36 auch die Wärmetauscheranordnung 42 aktiv sein. Durch das Betreiben der Klimaanlage wird die in den Fahrzeuginnenraum einzuleitende Luft L einerseits gekühlt, andererseits wird ihr jedoch auch Feuchtigkeit entzogen. Durch das Betreiben bzw. Aktivieren der Wärmetauscheranordnung 42 wird diese gekühlte und getrocknete Luft dann wieder erwärmt, um sie mit der gewünschten Temperatur in den Fahrzeuginnenraum einzuleiten.

In diesem Betriebszustand wird gemäß der vorliegenden Erfindung weiterhin dafür gesorgt, dass durch Aktivieren bzw. Betreiben der Heizanordnung 20 die den Verdampfer 36 anströmende Luft L bereits vorerwärmt wird. Dieses Vorerwärmen hat zur Folge, dass die Feuchtigkeitsablagerung im Bereich des Verdampfers 36 vermindert wird, was auch die Gefahr der Keimbildung reduziert. Es ist selbstverständlich, dass bei Zuschalten der Heizanordnung 20 dann die Wärmetauscheranordnung 42 in ihrem Wärmeübertragungsvermögen gedrosselt werden muss, um dafür zu sorgen, dass die in den Fahrzeuginnenraum eingeleitete Luft auch tatsächlich die vom Fahrer gewünschte Temperatur hat. In diesem Betriebszustand ist es nicht notwendig, dass über die gesamte Dauer hinweg die beiden Wärmetauscheranordnungen 24 und 42 gleichzeitig aktiv sind. Beispielsweise kann die Heizanordnung 20 intervallweise in Betrieb gesetzt werden, wobei dann in entsprechender Art und Weise intervallweise das Wärmeübertragungsvermögen der Wärmetauscheranordnung 42 gemindert werden kann.

In einer Phase, in welcher die Klimaanlage und somit der Verdampfer 36 nicht aktiv ist, in welcher aber beispielsweise aufgrund des vorangehenden Betreibens derselben davon auszugehen ist, dass im Bereich des Verdampfers 36 sich eine vergleichsweise große Feuchtigkeitsmenge angesammelt hat, kann ebenfalls die Heizanordnung 20 aktiviert werden, um durch Wärmeübertrag auf die auf den Verdampfer 36 zu strömende Luft dort vorhandene Feuchtigkeit abzutragen und somit den Verdampfer 36 im Prinzip zu trocknen. Diese Betriebsart wird vorzugsweise auch dann vorgenommen, wenn ohnehin gewünscht wird, dass die in den Fahrzeuginnenraum einzuleitende Luft erwärmt wird, was im Allgemeinen unter Einsatz der Wärmetauscheranordnung 42 erfolgt. In diesem Falle kann also wiederum die Wärmetauscheranordnung 42 in ihrem Wärmeübertragungsvermögen gedrosselt werden, so dass ein Teil der mit der Luft in den Fahrzeuginnenraum zu transportierenden Wärme durch diese und ein anderer Teil durch die Wärmetauscheranordnung 24 übertragen wird.

Weiterhin ist es bei dem erfindungsgemäßen Temperiersystem 10 selbstverständlich möglich, die Heizanordnung 20 alleine in Betrieb zu setzen, beispielsweise in einen Standheizungsmodus oder in einen Betriebszustand, in dem nach Starten einer Brennkraftmaschine im Kühlkreislauf derselben noch nicht ausreichend Wärme bereitgestellt wird, um die in den Fahrzeuginnenraum einzuleitende Luft im Bereich der Wärmetauscheranordnung 42 ausreichend erwärmen zu können.

Vorangehend ist die vorliegende Erfindung so geschildert worden, dass die Heizanordnung 20 ein nicht weiter dargestelltes brennstoffbetriebenes Heizgerät umfasst. Selbstverständlich ist es möglich, die stromaufwärts des Verdampfers 36 auf die Luft zu übertragende Wärme durch andere Wärmequellen bereitzustellen. So kann die Heizanordnung 20 auch eine elektrisch betreibbare Energiequelle umfassen, die entweder die dort generierte Wärme auf ein durch die Wärmetauscheranordnung 24 zirkulierendes Fluid überträgt, oder die direkt in den Luftstrom eingegliedert ist und so mit ihrer erwärmten Oberfläche selbst die Wärmetauscheranordnung 24 bereitstellt. Insbesondere können hierfür so genannte PTC-Elemente eingesetzt werden, die im Luftstrom vor dem Verdampfer 36 positioniert werden. Als Energiequellen für derartige elektrisch betreibbare Heizeinrichtungen kommen beispielsweise ein im Fahrbetrieb Elektrizität erzeugender Generator, eine Batterie des Fahrzeugs, in Dachmodulen integrierte Solarzellen oder sonstige Hilfsenergiegeräte, wie z.B. eine Brennstoffzelle oder eine mechanisch betriebene Hilfsenergiequelle, wie z.B. thermodynamisch arbeitender Motor mit Generator, in Frage. Auch ist es möglich, die oder einen Teil der Wärme, die in einem Antriebsaggregat generiert wird und im Allgemeinen zum Erwärmen der in den Fahrzeuginnenraum einzuleitenden Luft genutzt wird, über die Wärmetauscheranordnung 24 stromaufwärts des Verdampfers 36 in die Luftströmung einzuspeisen und auf diese Art und Weise für eine Feuchtigkeitsabfuhr durch vorerwärmte Luft zu sorgen.

## Patentansprüche

1. Temperiersystem für ein Fahrzeug, umfassend:
- einen Verdampfer (36) einer Klimaanlage, wobei durch den Verdampfer (36) der in einen Fahrzeuginnenraum einzuleitenden Luft Wärme oder/und Feuchtigkeit entziehbar ist,
- eine erste Wärmetauscheranordnung (42) in Luftströmungsrichtung stromabwärts des Verdampfers (36), wobei durch die erste Wärmetauscheranordnung (42) der in den Fahrzeuginnenraum einzuleitenden Luft Wärme zuführbar ist,
- eine Heizanordnung (20) mit einer zweiten Wärmetauscheranordnung (22) in Luftströmungsrichtung stromaufwärts des Verdampfers (36), wobei durch die zweite Wärmetauscheranordnung (22) der in den Fahrzeuginnenraum einzuleitenden Luft Wärme zuführbar ist.

2. Temperiersystem nach Anspruch 1,
**dadurch gekennzeichnet, dass** das Wärmeübertragungsvermögen der ersten Wärmetauscheranordnung (42) und das Wärmeübertragungsvermögen der zweiten Wärmetauscheranordnung (22) in aufeinander abgestimmter Weise veränderbar sind.

3. Temperiersystem nach Anspruch 2,
**dadurch gekennzeichnet, dass** das Wärmeübertragungsvermögen der ersten Wärmetauscheranordnung (42) durch Verändern der Strömungsführung der in den Fahrzeuginnenraum einzuleitenden Luft veränderbar ist.

4. Temperiersystem nach Anspruch 2 oder 3,
**dadurch gekennzeichnet, dass** das Wärmeübertragungsvermögen der zweiten Wärmetauscheranordnung (22) durch Verändern der Heizleistung der Heizanordnung (20) veränderbar ist.

5. Temperiersystem nach einem der Ansprüche 1 bis 4,
**dadurch gekennzeichnet, dass** die Heizanordnung (20) umfasst:
- ein brennstoffbetriebenes Heizgerät,
- eine elektrisch betreibbare Wärmequelle,
- eine Hilfsenergiequelle, vorzugsweise Brennstoffzelle oder mechanisch oder thermodynamisch betriebene Hilfsenergiequelle,
- ein Fahrzeugantriebsaggregat.

6. Temperiersystem nach einem der Ansprüche 1 bis 5,
**dadurch gekennzeichnet, dass** die erste Wärmetauscheranordnung (42) von einem Kühlsystem einer Brennkraftmaschine gespeist ist.

7. Verfahren zum Betreiben eines Temperiersystems (10) nach einem der vorangehenden Ansprüche, bei welchem Verfahren die erste Wärmetauscheranordnung (42) und die zweite Wärmetauscheranordnung (22) wenigstens zeitweise gleichzeitig zur Übertragung von Wärme auf die in den Fahrzeuginnenraum einzuleitende Luft aktiv sind.

8. Verfahren nach Anspruch 7,
**dadurch gekennzeichnet, dass** bei aktivierter erster Wärmetauscheranordnung (42) dann, wenn der Verdampfer (36) aktiviert wird, die Heizanordnung (20) mit der zweiten Wärmetauscheranordnung (22) aktiviert wird und das Wärmeübertragungsvermögen der ersten Wärmetauscheranordnung (42) verringert wird.

9. Verfahren nach einem der Ansprüche 1 bis 8,
**dadurch gekennzeichnet, dass** die zweite Wärmetauscheranordnung (24) zum Trocknen des Verdampfers (36) herangezogen wird.
